# EUROPEAN PATENT SPECIFICATION

(11) **EP 3 599 675 B1**
(45) Date of publication and mention of the grant of the patent: **30.06.2021**
(21) Application number: 18185698.0
(22) Date of filing: 26.07.2018
(51) Int. Cl.: H01R 25/16

(54) **BUSBAR AND METHOD FOR MANUFACTURING A BUSBAR**
SAMMELSCHIENE UND VERFAHREN ZUR HERSTELLUNG EINER SAMMELSCHIENE
BARRE DE BUS ET PROCÉDÉ DE FABRICATION D'UNE BARRE DE BUS

(43) Date of publication of application: 29.01.2020
(73) Proprietor: Rogers BV, 9940 Evergem (BE)
(72) Inventor: DANEELS , Jan, 9940 Evergem (BE); PAS SAGUES, Pablo, 9940 Evergem (BE); TANG, Crystal, Suzhou (BE); DE BOODT, Sebastian, 9940 Evergem (BE); VANDEWYNCKEL, Jan, 9940 Evergem (BE)
(74) Representative: Müller Schupfner & Partner Patent- und Rechtsanwaltspartnerschaft mbB

(56) References cited:
- EP-A1- 1 912 295
- EP-A2- 1 087 300
- WO-A1-2017/021311
- CN-B- 104 022 414

## Description

The present invention concerns a busbar and a method for manufacturing a busbar, in particular a busbar on that several capacitors can be arranged.

Laminated busbars typically comprise layers of fabricated copper separated by thin dielectric materials, laminated into a unified structure. Examples for laminated busbars can be found in CN 203 504 394 U, CN 104 022 414 A1 or CN 202 474 475 U. Usually a "plug-in" region is included into the busbar, in order to connect electrical poles of an electronic component, such as a capacitor directly to different conductive layers, wherein each of the conductive layers is assigned to a type of the poles provided by each capacitor. Typically, the capacitors are connected to the plug-in region by inserting a pin into a hole of the plug-in region. Subsequently, the pins are adhesively connected to the busbar, for example by soldering and/or welding.

WO 2017 021 311 A1 discloses a busbar according to the preamble of claim 1, the busbar having at least one base body which is plate-shaped in some sections, with a top and a bottom, comprising a conductor layer and at least one first and second insulation layer, connected to the conductor layer, and with a plurality of connectors, wherein at least one connector comprises at least one connection area and a through-passage opening.

EP 1 087 300 A2 deals with a busbar assembly for use with a plurality of pin members having respective lengths comprising at least first, second and third busbars having substantially planar portions disposed in juxtaposition and extending substantially in respective planes.

However, there is a certain amount of energy needed to realize an adhesive connection between the busbar and the pin. Further, the production of the adhesive bond might cause a curvature protruding from the busbar, having in general a flat surface, in particular when the connection is realized by soldering. Such a curvature might be a problem in a certain application area of the busbar. Further, when the pin region is heated, a lot of heating energy is lost into the flat layers of the conductive material of the busbar.

Starting from that, it is an object of the present invention to improve the laminated busbars known in the state of the art, in particular with respect to their production and their potential fields of applications.

This object is achieved by the busbar according to claim 1 and a method for manufacturing such a busbar according to claim 11. Prefered embodiments are incorporated in the dependent claims, the description and the figures.

According to a first aspect of the present invention, a busbar, in particular a laminated busbar, is provided, wherein the busbar is configured for mounting an electronic component on the busbar, in particular a passive electronic component, such as a capacitor. The busbar comprises at least one plug-in region configured for inserting a contact element of the electronic component into the busbar, wherein the busbar comprises a first conductive layer, wherein said first conductive layer, which is assigned to the plug-in region, extends in a first plane and the plug-in region extends in a second plane. In particular, the contact element is a pin of the electronic component. Further, the first plane and the second plane are spaced from each other in a direction extending perpendicular to the first and/or the second plane for forming a recessed plug-in region.

In contrast to the state of the art, it is provided according to the present invention to realize a recessed plug in-region by spacing the first and second plane from each other. As a consequence, it is possible to provide a flat surface, even after the pin is connected to the busbar, for example by soldering, since the pin and/or a soldering material can fill the recessed plug-in region and does no longer protrude from the surface of the busbar. In particular, it is advantageously possible to connect the busbar being equipped with the capacitors to another component, in particular to another flat component, for instance in a vehicle. Therefore, the busbar can be used in different fields of application. Preferably, the recessed plug-in region represents a bottom of a pot-like shape of the first conductive layer.

In particular, the busbar comprises a second conductive layer, wherein the first conductive layer and the second conductive layer are separated from each other by an isolation layer. In particular the first conductive layer, the second conductive layer and the isolation layer forms a sandwich system. Preferably, the laminated busbar comprises a further isolation layer covering the sandwich system including the first conductive layer, the isolation layer and the second conductive layer. Furthermore, it is provided that the busbar has a rectangular or disk-like shape for carrying several electrical components such as capacitors, in particular arranged in rows being adjacent next to each other. In principle, the main function of the busbar is to collect an electrical power provided by the several capacitors and provide the collected electrical power by corresponding terminals to a user or a machine, for example by corresponding terminals connected to the first conductive layer and/or the second conductive layer.

The term "assigned" means that there is an electrical connection between the plug-in region and the first conductive layer. In particular, the plug-in region is incorporated into the first conductive layer or is an integral part of the conductive layer. For example the plug-in region is realized by deforming a part of the first conductive layer, in particular by stamping. However, it is also thinkable that the plug-in region is added to the conductive layer in a separate manufacturing step. Moreover it is also provided that the second conductive layer has a further plug-in region, wherein the second conductive layer extends along a further first plane and the further plug-in region extends along a further second plane, wherein the further first plane and the further second plane are separated from each other. In particular the distance separating the further first plane and the further second plane differs from the distance separating the first plane and the second plane.

According to the invention, it is provided that the plug-in region is at least partially surrounded by at least one recess, wherein the recess extends between the first plane and the second plane. Due to the recess it is possible to limit or restrict a heat transport from the plug-in region to the first conductive layer. As a consequence, the heat generated and needed for soldering is not dissipated to the conductive layer. Instead, the heat is concentrated to the plug-in region for realizing the adhesive or soldering or brazing connection between the pin and the plug-in region. Preferably, the form of the recess is adapted to limit or to reduce a heat transfer from the plug-in region to the conductive layer. In particular, it is provided that the recess is configured, for example in size, number and/or form, such that a heat transfer from the plug-in region to the first conductive layer is reduced about more than 10 %, preferably more than 25 % and most preferably more than 35 % compared to a corresponding plug-in region being connected to first conductive layer without recess or recesses.

It is preferably provided that the plug-in region is connected to the conductor layer of the busbar via a bridge element, such as a rip element, for realizing an electrical connection between the plug-in region and a conductive layer of the busbar. The bridge element takes care for establishing an electrical conductive connection between the plug-in region and the first conductive layer. Preferably, the bridge-element is formed as a rip element. Such a rip element extends mainly radially from a center of the plug-in region. It is also conceivable that the plug-in region is connected to the first conductive layer via several rip elements that for instance extend radially from the centre of the plug-in region. For example, the plug- in region is connected to the first conductive layer via two, three or four rip element. Preferably two rip elements are arranged at opposite ends or the plug-in region.

In another embodiment, it is provided that along a surrounding path a first part is assigned to the at least one recess or the recesses and a second part is assigned to the bridge element, wherein the surrounding path preferably has the form of the plug in region. In particular, it is provided that the plug-in region is limited by the recesses. The plug-in region in the second plane might have a cross section being formed circularly, elliptically, rectangularly or the like. Preferably there are several recesses provided, wherein the recesses are separated from each other along the surrounding path, especially homogeneously. In particular, the surrounding path represents as closed path that surrounds the plug-in region. For example, the surrounding path is adapted to the plug-in region, i. e. the surrounding path extends parallel to a circumference of the plug-in region.

Furthermore, it is provided that a relation of the first part to the length of the surrounding path is between 0.5 and 0.95, preferably between 0.7 and 0.95 and more preferably between 0.75 and 0.95. By choosing such small bridge elements it is advantageously possible to reduce the heat transfer during the connection between the pin and the plug-in region substantially, at least by 20 % or 50 %. Simultaneously, it has shown that the comparable thin bridge-elements are able to withstand/resist the pressure during a soldering process, in particular during an automated soldering process.

Preferably, it is provided that
- an area of a first cross section encloses the recess and/or recesses and the plug-in region, and
- an area of a second cross section encloses the plug-in region,
wherein a relation between the area of the first cross section and the area of the the second cross section is between 0.1 and 0.5, preferably between 0.2 and 0.4 and more preferably between 0.25 and 0.35. Thus, a comparable small area between the plug-in region and the conductive layer is provided for the recess or the recesses. In other words: the recesses are not extending too much into the first conductive layer. Instead the recesses are located near to the plug-in region. As a consequence, the influence of the recesses on the first conductive layer is small. In particular the recess has a strip like shape and mainly extends arched around the plug-in region. Further, the plug-in region has a disk-shaped form, in particular a circular or ring disk shaped form.

According to another embodiment it is provided that an area or a third cross section is assigned to the recess and/or the recesses, wherein a relation between the area of the third cross section to the area of the second cross section is between is between 0.5 and 1.5, preferably between 0.7 and 1.3 and most preferably between 0.9 and 1.1. In other words: the plug-in region is comparable to the area formed by recesses that surrounds the plug-in region. Thus, it is advantageously possible to concentrate the heat generated for forming the adhesive connection between the pin and the plug-in region to a comparable small area or region. According to another embodiment it is provided that the plug-in region comprises a hole, wherein a form of the hole is adapted to a form of the contact element of the electronic component, in particular such that the contact element can be inserted into the hole according to a key-lock principle. For example, the plug-in region has a circular or elliptical shape and a corresponding cross section of the pin has a complementary shape. By adapting the hole and pin in a key-lock principle it is advantageously possible to avoid that an inadequate capacitor is connected to the busbar. It is also conceivable that the position of different plug-in regions is adapted to avoid that an inadequate capacitor is connected to the busbar.

In a preferred embodiment of the present invention, it is provided that in a direction perpendicular to the first plane and/or the second plane a distance between the first plane and the second plane is greater than a half of a thickness of the conductive layer, preferably greater than the thickness of the conductive layer and more preferably greater than twice the thickness of the conductive layer. Thus, it is advantageously possible to use almost a whole thickness of the busbar for forming the recessed plug-in region. Consequently, a comparable big volume is provided to the pin and the soldering material.

In another embodiment, it is provided that the bridge element has a curved shape for providing a distance between the first plane and the second plane. In particular, the bridge-element extends perpendicular or slanted to the first plane and/or the second plane.

It is preferably provided that the busbar comprises a second conductive layer being spaced from the first conductive layer by an isolation layer, wherein in the second conductive layer and/or the isolation layer, a recess is provided, wherein the size of the recess in the conductive layer and/or the isolation layer mainly corresponds to an area of the first cross section area. Thus, it is advantageously possible to stack the first conductive layer, the isolation layer and the second conductive layer, wherein the recessed plug-in region reaches through the second conductive layer and/or the isolation layer.
Another aspect of the present invention is a busbar, in particular a laminated busbar, configured for mounting an electronic component on the busbar, in particular a passive electronic component, wherein the busbar comprises at least one plug-in region configured for inserting a contact element of the electronic component, in particular a pin of the electronic component, into the busbar, wherein plug-in region is at least partially surrounded by at least one recess, wherein the recess preferably extends between the first plane and the second plane.

Another aspect of the present invention concerns a method for manufacturing a busbar, according to the present invention, wherein a recess is cut into a conductor layer of the busbar. For example, the recess is realized by punching. Moreover, it is provided that the plug-in region is realized by deforming the first conductive layer.

Furthermore, it is preferably provided that a contact element of an electronic component is inserted into a plug-in region of the busbar, wherein the contact element is soldered and/or welded to the plug-in region, preferably automatically by a robot. By using a robot, forming the connection between the plug-in region and the pin can be accelerated advantageously.

According to another embodiment of the present invention, it is provided that the contact element is a pin and the pin is bended before soldering and/or welding. It is also thinkable that parts that protrude from the surface of the busbar are removed after the soldering, welding and/or bending. As a consequence, a flat surface of the busbar can be guaranteed.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- Fig. 1: schematically shows a perspective view on a busbar according to a preferred embodiment of the present invention,
- Fig. 2: schematically shows a side view of the busbar from figure 1,
- Fig. 3: schematically shows a first conductive layer including a plug-in region for the busbar according to the preferred embodiment,
- Fig. 4a: schematically shows the plug-in region of the busbar according to the preferred embodiment in a top view,
- **Fig. 4b**: schematically shows the plug-in region of the busbar according to the preferred embodiment in a cross sectional side view and
- **Fig. 5**: schematically shows a busbar according to a further preferred embodiment of the present invention.

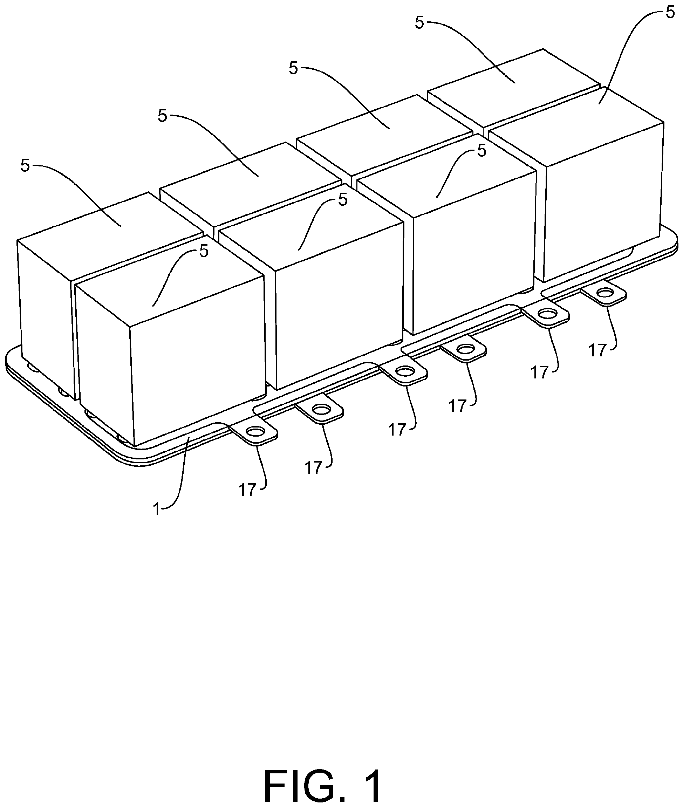

In **Figure 1**, a busbar 1 according to an exemplary embodiment of the present invention is illustrated. In particular, the busbar 1 is designed as a laminated busbar, comprising at least a first conductive layer 10 and a second conductive layer 20 that are separated by at least one isolation layer 15. Both the first conductive layer 10 and the second conductive layer 20 are provided to collect and to conduct a current caused by several capacitors 5 being arranged on the busbar 1 and respectively connected to the first conductive layer 10 and the second conductive layer 20.

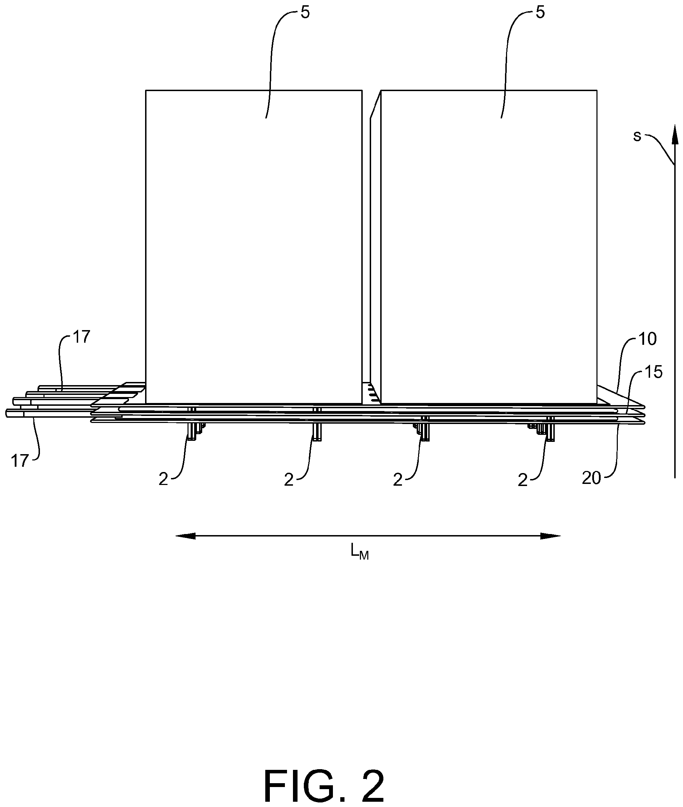

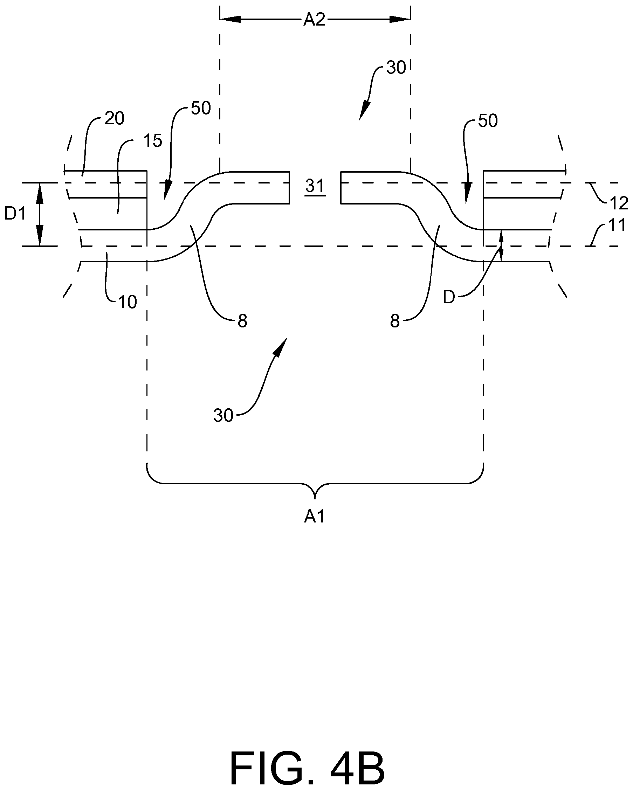

Especially, the first conductive layer 10 and/or the second conductive 20 layer are made out of a metal, in particular copper and/or aluminium. Preferably, the first conductive layer 10, the second conductive layer 20 and the isolation layer 15 are extending parallel to each other and are stacked on each other along a stacking direction S being perpendicular to a main extending plane M (Fig. 2). In the illustrated embodiment there are eight capacitors 5 being located on the busbar 1. The first conductive layer 10 and the second conductive layer 20 are respectively connected to one electrical pole of each of the capacitors 5. For providing the electrical power, the first conductive layer 10 and/or the second conductive layer 20 each comprise at least one terminal 17 for delivering a certain voltage provided by the capacitor arranged on the busbar. Further, it is provided that the first conductive layer 10 extends in a first plane 11 and preferably the corresponding terminal 17 of the first conductive layer 10 extends in the first plane 11, too (Fig. 4b).

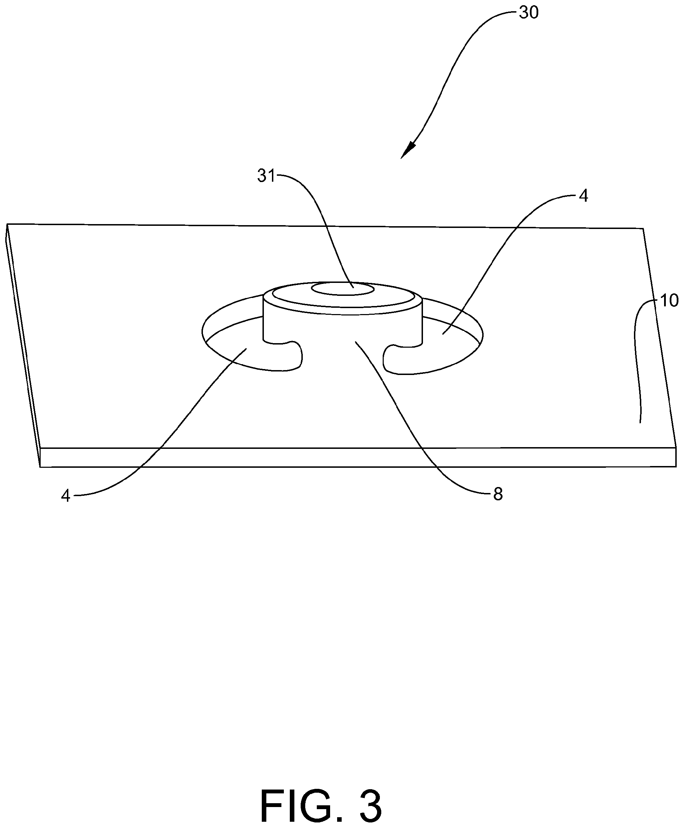

In **Figure 2****,** a side view of the busbar 1 having the capacitors 5 being arranged on the busbar 1 is illustrated. As illustrated the connection between each capacitor 5 and respectively the first conductive layer 10 and the second conductive layer 20 is realized by pins 2. Preferably, each capacitor 5 has a pin 2 assigned to a positive pole of the capacitor 5 and a pin 2 assigned to a negative pole of the capacitor 5. Both pins 2 reach through the busbar 1, wherein one pin 2 of each capacitor 5 is connected to the first conductive layer 10 and the other pin 2 is connected to the second conductive layer 20. For example, it is provided that all negative poles are connected to the first conductive layer 10 and all positive poles of the capacitors 5 are connected to the second conductive layer 20. For connecting the respective pins 2 to the first conductive layer 10 and the second conductive layer 20, plug-in regions 30 are provided (Fig. 3). Preferably, for each pin 2 one plug-in region 30 is provided. The plug-in region 30 comprises a hole 31 that is adapted in its shape to the form of the pin 2 so that the pin 2 can be inserted into the hole 31 by a movement in a direction perpendicular to the first plane 11 and/or parallel to the stacking direction S. In the case of a cylindrical pin, the hole 31 might have a circular shape. It is also conceivable that the pin 2 has a rectangular cross section and the hole 31 is formed rectangular in the same form. Preferably, the hole 31 and the cross section of the pin 2 are realized according to a key-lock principle.

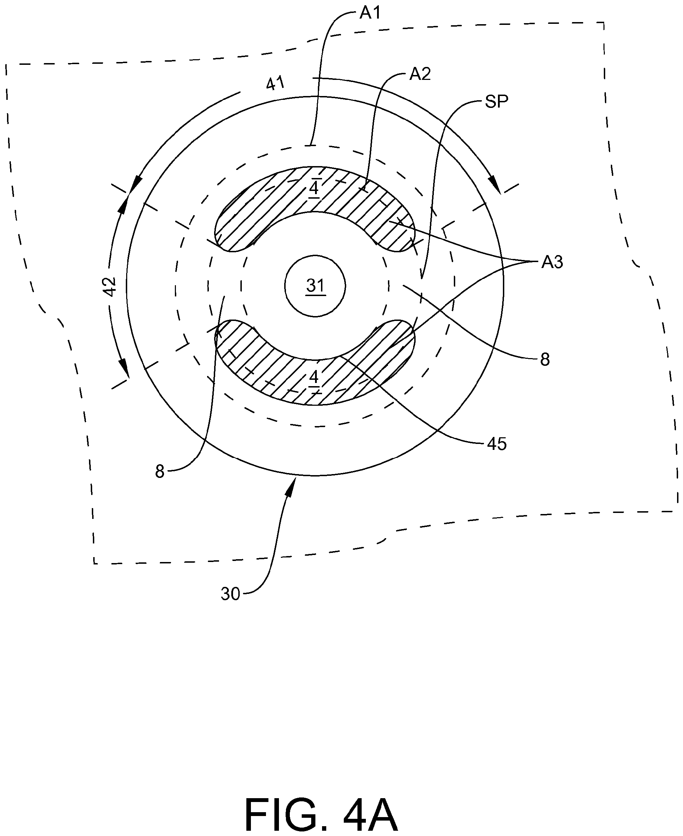

In **Figure 3****,** a detailed view on the plug-in region 30 is illustrated in a perspective view, wherein in turn in **Figure 4a** the plug-in region is presented in a top view and in **Figure 4b** in a cross-sectional view. In particular it is provided that the plug-in region 30, which is assigned/connected to the first conductive layer 10, extends to a second plane 12, wherein the second plane 12 is spaced/separated from the first plane 11. In other words, the plug-in region 30 is not located in the first plane of the first conductive layer 10 for forming a recessed plug-in region 30. Further, the plug-in region 30 is surrounded by at least one recess 4, in particular two recesses 4. The recesses 4 are intended for limiting a heat transfer during a soldering process that connects the pin 2 to the plug-in region 30. Without such recesses 4 the heat generated by the soldering would be directly transferred to the first conductive layer 10 and could not be used for soldering. The electrical connection between the first conductive layer 10 and the plug-in region 30 is established by a bridge element, in particular in form of a rip element 8. In the presented embodiment there are two rip elements 8 extending parallel to each other, in particular along a common line. Furthermore, it is provided that a size and form of the bridge element is adapted to the individual application intended for the busbar 1. For example, the size and form is adapted to the capacity of the capacitor 5 being arranged on the busbar 1. Preferably, the plug-in region 30 has a disk-like shape in general.

Preferably, it is provided that along a surrounding path SP surrounding the plug-in region 30
- a first part 41 is assigned at least to one recess 4 or to all recesses 4, and
- a second part 42 is assigned to the bridge element,
wherein the surrounding path SP especially corresponds to an outer shape 45 of the plug-in region 30 in the second plane 12 and/or the shape of the hole 31 of the plug-in region 30. For example the surrounding path SP corresponds to a circle being concentric to the hole 31 of the plug-in region 30. Furthermore, it is provided that a relation of the first part 41 to the length of the surrounding path SP is between 0.5 and 0.95, preferably between 0.7 and 0.95 and more preferably between 0.75 and 0.95. Furthermore, it is also conceivable that the recesses 4 are realized as a perforation or an assembly of holes, in particular holes being smaller than the hole 31 for inserting the pin, surrounding the plug-in region 30. Since the bridge-element establishes the electrical connection between the first conductive layer 10 and the plug-in region 30, it is provided that the bridge - element is curved or bended, in particular in a direction parallel to the stacking direction S. Furthermore, it is provided that
- an area of a first cross section or area of a first cross section A1 encloses the recess 4 and/or recesses 4 and the plug-in region 30, and
- an area of a second cross section or area of a second cross section A2 encloses the plug-in region 30,
wherein a relation between the area of the first cross section A1 and the are of the second cross section A2 is between 0.1 and 0.5, preferably between 0.2 and 0.4 and more preferably between 0.25 and 0.35. Additionally, an area of a third cross section A3 is assigned to the recess 4 and/or the recesses 4, wherein a relation between the area of the third cross section to the area of the second cross section is between 0.5 and 1.5, preferably between 0.7 and 1.3 and most preferably between 0.9 and 1.1.

According to figure 4b, it is preferably provided that the second plane 12 of the plug-in region 30 extends parallel to the plane of the second conductive layer 20. A distance D1 measured in a direction parallel to the stacking direction S is preferably measured from a middle of the first conductive layer 10 to the middle of the plug-in region 30. Furthermore, it is provided that the second conductive layer 20 extends in the second plane 12. In particular, it is provided that the second conductive layer 20 and/or the isolation layer 15 have another recess 50 being configured such that the plug-in region 30 of the first conductive layer 10 can reach through the isolation layer 15 and onto or even beyond the recess 50 of the second conductive layer 12. Furthermore, a thickness D of the first conductive layer 10 is illustrated in figure 4b.

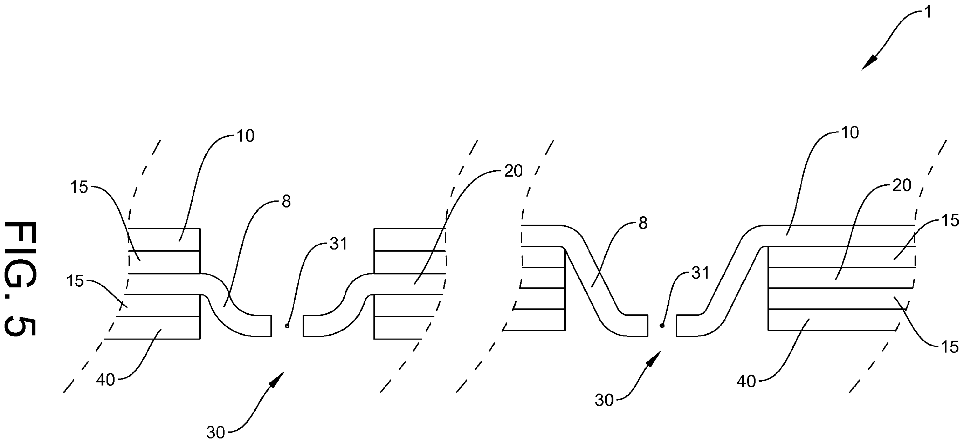

In figure 5, a busbar 1 according to a further preferred embodiment of the present invention is shown. The busbar 1 of figure 5 comprises a third conductive layer 40 in addition to the first conductive layer 10 and the second conductive layer 20. The third conductive layer 40 is arranged next to the second conductive layer 20 along the stacking direction S, wherein the second conductive layer 20 is spaced from the third conductive layer 40 in stacking direction S by another isolation layer 15. Preferably, it is provided that both the first conductive layer 10 and the second conductive layer 20 each have at least one plug-in region 31. In particular, the plug-in region 30 of the first conductive layer 10 and the plug-in region 30 of the second conductive layer 20 are configured such that they finish in stacking direction S in a common plane, preferably in a plane being assigned to the outer side of the busbar 1. Preferably, the plug in-region 30 of the second conductive layer 20 and the plug-in region 30 of the first conductive layer 10 are flush with the third conductive layer 40. For that, the rip element 8 of the plug - in region 30 of the first conductive layer 10 extends longer in stacking direction S compared to the rip element 8 of the plug in region 30 of the second conductive layer 20. As a consequence of this arrangement, a height of all solderings is the same. Furthermore, it is conceivable for the skilled person to realize such an arrangement with even more than three conductive layers 10, 20, 40.

### Reference signs:

- 1: busbar
- 2: pin
- 4: recess
- 5: capacitor
- 8: rip element
- 10: first conductive layer
- 11: first plane
- 12: second plane
- 15: isolation layer
- 17: terminal
- 20: second conductive layer
- 30: plug-in region
- 31: hole
- 40: third conductive layer
- 41: first part
- 42: second part
- 45: outer shape
- 50: another recess
- S: stacking direction
- M: main extending plane
- SP: surrounding path
- A1: first cross section
- A2: second cross section
- A3: third cross section
- D: thickness
- D1: distance

## Claims

1. Busbar (1), in particular a laminated busbar (1), configured for mounting an electronic component on the busbar (1), in particular a passive electronic component, wherein the busbar (1) comprises at least one plug-in region (30) configured for inserting a contact element of the electronic component, in particular a pin (2) of the electronic component, into the busbar (1), wherein the busbar (1) comprises a first conductive layer (10), wherein said first conductive layer (10) which is assigned to the plug-in region (30) extends in a first plane (11) and the plug-in region (30) extends in a second plane (12), wherein the first plane (11) and the second plane (12) are spaced from each other in a direction extending perpendicular to the first plane (11) and the second plane (12) for forming a recessed plug-in region (30), **characterized in that** the plug-in region (30) is at least partially surrounded by at least one recess (4), wherein the recess (4) extends between the first plane (11) and the second plane (12).

2. Busbar according to claim 1, wherein the plug-in region (30) is connected to the first conductive layer (10) of the busbar (1) via a bridge element, such as a rip element (8), for realizing an electrical connection between the plug-in region (30) and the first conductive layer (10) of the busbar (1).

3. Busbar (1) according to claim 2, wherein along a surrounding path (SP), which surrounds a hole (31) of the plug-in region (30), a first part (41) of the plug-in region (30) is assigned to the at least one recess (4) or to the recesses (4) and a second part (42) of the plug-in region (30) is assigned to the bridge element, wherein the surrounding path (SP) preferably has the shape of the plug-in region (30).

4. Busbar (1) according to claim 3, wherein a relation of the first part (41) to the length of the surrounding path (SP) is between 0.5 and 0.95, preferably between 0.7 and 0.95 and more preferably between 0.75 and 0.95.

5. Busbar (1) according to one of the preceding claims, wherein the area of a first cross section (A1) encloses the recess (4) and/or recesses (4) and the plug-in region (30) and the area of a second cross section (A2) encloses the plug-in region (30), wherein a relation between the area of the first cross section (A1) and the area of the second cross section (A2) is between 0.1 and 0.5, preferably between 0.2 and 0.4 and more preferably between 0.25 and 0.35.

6. Busbar (1) according to one of the preceding claims, wherein the area of a third cross section (A3) is assigned to the recess (4) and/or the recesses (4), wherein a relation between the area of the third cross section (A3) to the area of the second cross section (A2) is between 0.5 and 1.5, preferably between 0.7 and 1.3 and most preferably between 0.9 and 1.1.

7. Busbar (1) according to one of the preceding claims, wherein the plug-in region (30) comprises the hole (31), wherein a form of the hole (31) is adapted to a form of the contact element of the electronic component, in particular such that the contact element is insertable into the hole (31) according to a key-lock principle.

8. Busbar (1) according to one of the preceding claims, wherein in a direction perpendicular to the first plane (11) and/or the second plane (12) a distance between the first plane (11) and the second plane (11) is greater than half of a thickness (D) of the first conductive layer (10), preferably greater than the thickness (D) of the first conductive layer (10) and more preferably greater than twice the thickness (D) of the first conductive layer (10).

9. Busbar (1) according to claim 8, wherein the bridge element has a curved shape for providing a distance (D1) between the first plane (11) and the plug-in region (30).

10. Busbar (1) according to claim 5, wherein the busbar (1) comprises a second conductive layer (20) being spaced from the first conductive layer (10) by an isolation layer (15), wherein in the second conductive layer (20) and/or the isolation layer (15) another recess (50) is provided, wherein the size of the another recess (50) in the second conductive layer (20) and/or the isolation layer (15) mainly corresponds to the area of the first cross section (A1).

11. Method for manufacturing a busbar (1) according to one of the preceding claims, wherein at least one recess (4) is cut into a first conductor layer (10) of the busbar (1).

## Patentansprüche

1. Sammelschiene (1), insbesondere eine laminierte Sammelschiene (1), die zur Montage eines elektronischen Bauteils, insbesondere eines passiven elektronischen Bauteils, auf der Sammelschiene (1) konfiguriert ist, wobei die Sammelschiene (1) mindestens einen Steckbereich (30) aufweist, der zum Einstecken eines Kontaktelements des elektronischen Bauteils, insbesondere eines Stifts (2) des elektronischen Bauteils, in die Sammelschiene (1) ausgebildet ist, wobei die Sammelschiene (1) eine erste leitfähige Schicht (10) aufweist, wobei die dem Steckbereich (30) zugeordnete erste leitfähige Schicht (10) in einer ersten Ebene (11) und der Steckbereich (30) in einer zweiten Ebene (12) verläuft, wobei die erste Ebene (11) und die zweite Ebene (12) in einer senkrecht zur ersten Ebene (11) und zur zweiten Ebene (12) verlaufenden Richtung zur Bildung eines ausgesparten Steckbereichs (30) voneinander beabstandet sind, **dadurch gekennzeichnet, dass** der Steckbereich (30) zumindest teilweise von mindestens einer Aussparung (4) umgeben ist, wobei sich die Aussparung (4) zwischen der ersten Ebene (11) und der zweiten Ebene (12) erstreckt.

2. Sammelschiene nach Anspruch 1, wobei der Steckbereich (30) über ein Brückenelement, wie ein Rippenelement (8), mit der ersten leitfähigen Schicht (10) der Sammelschiene (1) verbunden ist, um eine elektrische Verbindung zwischen dem Steckbereich (30) und der ersten leitfähigen Schicht (10) der Sammelschiene (1) zu realisieren.

3. Sammelschiene (1) nach Anspruch 2, wobei entlang einer Umgebungsstrecke (SP), die ein Loch (31) des Steckbereichs (30) umgibt, ein erster Teil (41) des Steckbereichs (30) der mindestens einen Aussparung (4) oder der Aussparungen (4) zugeordnet ist und ein zweiter Teil (42) des Steckbereichs (30) dem Brückenelement zugeordnet ist, wobei die Umgebungsstrecke (SP) vorzugsweise die Form des Steckbereichs (30) aufweist.

4. Sammelschiene (1) nach Anspruch 3, wobei ein Verhältnis des ersten Teils (41) zur Länge der Umgebungsstrecke (SP) zwischen 0,5 und 0,95, vorzugsweise zwischen 0,7 und 0,95 und besonders bevorzugt zwischen 0,75 und 0,95 liegt.

5. Sammelschiene (1) nach einem der vorhergehenden Ansprüche, wobei die Fläche eines ersten Querschnitts (A1) die Aussparung (4) und/oder Aussparungen (4) und den Steckbereich (30) umschließt und die Fläche eines zweiten Querschnitts (A2) den Steckbereich (30) umschließt, wobei ein Verhältnis zwischen der Fläche des ersten Querschnitts (A1) und der Fläche des zweiten Querschnitts (A2) zwischen 0,1 und 0,5, vorzugsweise zwischen 0,2 und 0,4 und besonders bevorzugt zwischen 0,25 und 0,35 liegt.

6. Sammelschiene (1) nach einem der vorhergehenden Ansprüche, wobei der Aussparung (4) und/oder den Aussparungen (4) die Fläche eines dritten Querschnitts (A3) zugeordnet ist, wobei ein Verhältnis zwischen der Fläche des dritten Querschnitts (A3) und der Fläche des zweiten Querschnitts (A2) zwischen 0,5 und 1,5, vorzugsweise zwischen 0,7 und 1,3 und besonders bevorzugt zwischen 0,9 und 1,1 liegt.

7. Sammelschiene (1) nach einem der vorhergehenden Ansprüche, wobei der Steckbereich (30) das Loch (31) aufweist, wobei eine Form des Lochs (31) an eine Form des Kontaktelements des elektronischen Bauteils angepasst ist, insbesondere derart, dass das Kontaktelement nach einem Schlüssel-Schloss-Prinzip in das Loch (31) einsteckbar ist.

8. Sammelschiene (1) nach einem der vorhergehenden Ansprüche, wobei in einer Richtung senkrecht zu der ersten Ebene (11) und/oder der zweiten Ebene (12) ein Abstand zwischen der ersten Ebene (11) und der zweiten Ebene (11) größer ist als die Hälfte einer Dicke (D) der ersten leitfähigen Schicht (10), vorzugsweise größer als die Dicke (D) der ersten leitfähigen Schicht (10) und besonders bevorzugt größer als die doppelte Dicke (D) der ersten leitfähigen Schicht (10).

9. Sammelschiene (1) nach Anspruch 8, wobei das Brückenelement eine gekrümmte Form aufweist, um einen Abstand (D1) zwischen der ersten Ebene (11) und dem Steckbereich (30) vorzusehen.

10. Sammelschiene (1) nach Anspruch 5, wobei die Sammelschiene (1) eine zweite leitfähige Schicht (20) aufweist, die von der ersten leitfähigen Schicht (10) durch eine Isolationsschicht (15) beabstandet ist, wobei in der zweiten leitfähigen Schicht (20) und/oder der Isolationsschicht (15) eine weitere Aussparung (50) vorgesehen ist, wobei die Größe der weiteren Aussparung (50) in der zweiten leitfähigen Schicht (20) und/oder der Isolationsschicht (15) im Wesentlichen der Fläche des ersten Querschnitts (A1) entspricht.

11. Verfahren zur Herstellung einer Sammelschiene (1) nach einem der vorhergehenden Ansprüche, wobei mindestens eine Aussparung (4) in eine erste leitfähige Schicht (10) der Sammelschiene (1) geschnitten wird.

## Revendications

1. Barre collectrice (1), en particulier barre collectrice stratifiée (1), configurée pour le montage d'un composant électronique, en particulier d'un composant électronique passif, sur la barre collectrice (1), la barre collectrice (1) comprenant au moins une zone d'enfichage (30) configurée pour l'insertion d'un élément de contact du composant électronique, en particulier d'une broche (2) du composant électronique, dans la barre collectrice (1), la barre collectrice (1) comprenant une première couche conductrice (10), la première couche conductrice (10) associée à la zone d'enfichage (30) s'étendant dans un premier plan (11) et la zone d'enfichage (30) s'étendant dans un deuxième plan (12), le premier plan (11) et le deuxième plan (12) étant espacés l'un de l'autre dans une direction perpendiculaire au premier plan (11) et au deuxième plan (12) pour former une zone d'enfichage (30) évidée, **caractérisée en ce que** la zone d'enfichage (30) est au moins partiellement entourée par au moins un évidement (4), l'évidement (4) s'étendant de préférence entre le premier plan (11) et le deuxième plan (12).

2. Barre collectrice selon la revendication 1, dans laquelle la zone d'enfichage (30) est connectée à la première couche conductrice (10) de la barre collectrice (1) par l'intermédiaire d'un élément formant pont, tel qu'un élément formant âme (8), pour réaliser une connexion électrique entre la zone d'enfichage (30) et la première couche conductrice (10) de la barre collectrice (1).

3. Barre collectrice (1) selon la revendication 2, dans laquelle, le long d'un trajet périphérique (SP) qui entoure un trou (31) de la zone d'enfichage (30), une première partie (41) de la zone d'enfichage (30) est associée audit au moins un évidement (4) ou aux évidements (4), et une deuxième partie (42) de la zone d'enfichage (30) est associée à l'élément formant pont, le trajet périphérique (SP) ayant de préférence la forme de la zone d'enfichage (30).

4. Barre collectrice (1) selon la revendication 3, dans laquelle un rapport de la première partie (41) sur la longueur du trajet périphérique (SP) est compris entre 0,5 et 0,95, de préférence entre 0,7 et 0,95 et de manière particulièrement préférée entre 0,75 et 0,95.

5. Barre collectrice (1) selon l'une des revendications précédentes, dans laquelle la surface d'une première section transversale (A1) entoure l'évidement (4) et/ou les évidements (4) et la zone d'enfichage (30), et la surface d'une deuxième section transversale (A2) entoure la zone d'enfichage (30), un rapport entre la surface de la première section transversale (A1) et la surface de la deuxième section transversale (A2) étant compris entre 0,1 et 0,5, de préférence entre 0,2 et 0,4 et de manière particulièrement préférée entre 0,25 et 0,35.

6. Barre collectrice (1) selon l'une des revendications précédentes, dans laquelle la surface d'une troisième section transversale (A3) est associée à l'évidement (4) et/ou aux évidements (4), un rapport entre la surface de la troisième section transversale (A3) et la surface de la deuxième section transversale (A2) étant compris entre 0,5 et 1,5, de préférence entre 0,7 et 1,3 et de manière particulièrement préférée entre 0,9 et 1,1.

7. Barre collectrice (1) selon l'une des revendications précédentes, dans laquelle la zone d'enfichage (30) comprend le trou (31), une forme du trou (31) étant adaptée à une forme de l'élément de contact du composant électronique, en particulier de telle sorte que l'élément de contact puisse être inséré dans le trou (31) selon un principe de verrouillage par clé.

8. Barre collectrice (1) selon l'une des revendications précédentes, dans laquelle, dans une direction perpendiculaire au premier plan (11) et/ou au deuxième plan (12), une distance entre le premier plan (11) et le deuxième plan (11) est supérieure à la moitié d'une épaisseur (D) de la première couche conductrice (10), de préférence supérieure à l'épaisseur (D) de la première couche conductrice (10) et de manière particulièrement préférée supérieure au double de l'épaisseur (D) de la première couche conductrice (10).

9. Barre collectrice (1) selon la revendication 8, dans laquelle l'élément formant pont présente une forme incurvée pour assurer une distance (D1) entre le premier plan (11) et la zone d'enfichage (30).

10. Barre collectrice (1) selon la revendication 5, dans laquelle la barre collectrice (1) comprend une deuxième couche conductrice (20) qui est espacée de la première couche conductrice (10) par une couche d'isolation (15), un autre évidement (50) étant prévu dans la deuxième couche conductrice (20) et/ou dans la couche d'isolation (15), la taille de l'autre évidement (50) dans la deuxième couche conductrice (20) et/ou dans la couche d'isolation (15) correspondant sensiblement à la surface de la première section transversale (A1).

11. Procédé de fabrication d'une barre collectrice (1) selon l'une des revendications précédentes, dans lequel au moins un évidement (4) est découpé dans une première couche conductrice (10) de la barre collectrice (1).
